# EUROPÄISCHE PATENTSCHRIFT

(11) **EP 3 733 986 B1**
(45) Veröffentlichungstag und Bekanntmachung des Hinweises auf die Patenterteilung: **20.03.2024**
(21) Anmeldenummer: 20180537.1
(22) Anmeldetag: 22.02.2018
(51) Int. Cl.: E03D 11/14, H02G 3/08

(54) **MONTAGERAHMEN FÜR EINEN SANITÄRARTIKEL MIT EINER ELEKTRODOSE**
ASSEMBLY FRAME FOR A SANITARY ARTICLE WITH ELECTRICAL BOX
CADRE DE MONTAGE POUR UN ARTICLE SANITAIRE AVEC UNE BOÎTE ÉLECTRIQUE

(43) Veröffentlichungstag der Anmeldung: 04.11.2020
(62) Teilanmeldung aus: 18158131.5
(73) Patentinhaber: Geberit International AG, 8645 Jona (CH)
(72) Erfinder: GREMLICH, Lukas, 8645 Rapperswil-Jona (CH)
(74) Vertreter: Frischknecht, Harry Ralph

(56) Entgegenhaltungen:
- EP-A1- 3 470 587
- DE-A1-102011 118 350
- DE-U1-202011 105 557

## Beschreibung

### TECHNISCHES GEBIET

Die vorliegende Erfindung betrifft einen Montagerahmen für einen Sanitärartikel nach dem Oberbegriff von Anspruch 1, sowie ein Verfahren zur Montage eines Sanitärartikels an einen solchen Montagerahmen nach dem Anspruch 5.

### STAND DER TECHNIK

Dusch-WCs verfügen üblicherweise über eine Duscheinrichtung, welche der Reinigung des Unterleibs eines Benutzers dient. Dazu ist üblicherweise ein Duscharm mit einer Duschdüse vorgesehen, welche im Duschbetrieb austretendes Duschwasser auf den Unterleib richtet. Damit keine Verschmutzung des Duscharms durch den Benutzer erfolgen kann, ist der Duscharm vorzugsweise beweglich ausgebildet. Dadurch kann der Duscharm gezielt für den Duschbetrieb in die Keramik, und vor beziehungsweise nach erfolgter Dusche wieder aus der Keramik heraus bewegt werden. Gegenüber herkömmlichen WCs erfordern Dusch-WCs somit sowohl Duschwasserleitungen zum Zuführen von Duschwasser in das Dusch-WC als auch Vorrichtungen, welche eine Stromversorgung des Dusch-WCs zulassen. Weiter kann zum Beispiel eine Geruchsabsaugung vorgesehen sein, die über elektrische Betätigungen und einen Lüftermotor verfügt, welche wiederum mit Strom versorgt werden müssen.

Oftmals fehlen allerdings Steckdosen und Stromanschlüsse in Badezimmern, welche einen Sanitärartikel mit Strom versorgen könnten. Beispielsweise befinden sich Steckdosen häufig neben einem Lichtschalter oder im Spiegelschrank. Es besteht daher ein Bedürfnis, Elektroanschlüsse in der Nähe von oder sogar am Montagerahmen vorzusehen.

Aus der EP 2 568 089 A1 ist eine WC-Anschlussvorrichtung in Form eines Montagerahmens für ein Dusch-WC bekannt, welche über eine elektrische Anschlusseinrichtung sowie eine Duschwasser-Anschlusseinrichtung verfügt. Bei der elektrischen Anschlusseinrichtung handelt es sich um eine Bohrung im Montagerahmen, durch welche eine elektrische Verbindung des Dusch-WCs mit einem sich hinter dem Montagerahmen befindlichen Elektroanschluss ermöglicht wird.

Nachteilig bei solchen Vorrichtungen ist jedoch, dass die Installation eines Dusch-WCs Fachkräfte aus unterschiedlichen Gewerben bzw. Gewerken benötigt. So ist für die Montage des Dusch-WCs ein Sanitär erforderlich, während für das Anbringen des Elektroanschlusses und dessen Verbindung mit dem Dusch-WC ein Elektriker herbeizuziehen ist. Dies macht nicht nur die Installationsarbeiten aufwendig, sondern ist auch mit höheren Kosten verbunden.

Montagerahmen mit Stromversorgung sind zum Beispiel aus DE202011105557U, EP3470587A und DE102011118350A bekannt.

### DARSTELLUNG DER ERFINDUNG

Es ist daher eine Aufgabe der vorliegenden Erfindung, die Nachteile des Standes der Technik zu überwinden. Insbesondere soll ein Montagerahmen bereitgestellt werden, welcher jeweils eine einfache und kostengünstige Installation eines Sanitärartikels ermöglichen.

Diese Aufgabe wird gelöst durch einen Montagerahmen gemäss Anspruch 1.

In einem ersten Aspekt wird ein Montagerahmen für einen Sanitärartikel, insbesondere ein WC oder Dusch-WC, angegeben, welcher eine Spülrohr-Aufnahme zur Aufnahme eines Spülrohrs zum Zuleiten von Spülwasser in den Sanitärartikel, ein Befestigungsmittel zur Aufnahme eines Abwasserrohrs zum Ableiten von Abwasser aus dem Sanitärartikel, und mindestens eine erste und eine zweite Befestigungseinrichtung zur Befestigung des Sanitärartikels am Montagerahmen umfasst. Die Spülrohr-Aufnahme, das Befestigungsmittel sowie die erste und zweite Befestigungseinrichtung definieren einen Zwischenraum, wobei eine Elektrodose zur Stromversorgung des Sanitärartikels im Zwischenraum angeordnet ist.

Der Zwischenraum wird durch zwei senkrechte Ebenen, welche in Einbaulage senkrecht durch die erste beziehungsweise zweite Befestigungseinrichtung verlaufen, und durch zwei horizontale Ebenen, welche in Einbaulage horizontal durch die Spülrohr-Aufnahme beziehungsweise das Befestigungsmittel verlaufen, definiert.

Oder anders gesagt kann der Zwischenraum durch zwei senkrechte Ebenen, welche sich entlang der Mittellinien der Montagelöcher als Befestigungseinrichtung erstrecken, und durch zwei horizontale Ebenen, welche orthogonal zu diesen senkrechten Ebenen stehen und horizontal durch die Spülrohr-Aufnahme und das Befestigungsmittel verlaufen, definiert werden.

Vorzugsweise ist der Zwischenraum derart angeordnet, dass er im Einbauzustand des Montagerahmens frei zugänglich ist, und wobei der Zwischenraum im Einbauzustand, im Falle eines mit dem Montagerahmen verbundenen Sanitärartikels, vorzugsweise durch den Sanitärartikel überdeckt wird.

Die Elektrodose kann in einer Variante mit dem unten genannten Befestigungsmittel, welches am Rohr befestigbar ist, ausgebildet sein. In einer alternativen Variante kann die Elektrodose ohne das oben genannte Befestigungsmittel ausgebildet sein, wobei das Rohr dann anderweitig mit dem Montagerahmen verbunden wird.

In einer besonders bevorzugten Ausführung kann das Befestigungsmittel eine Rohrschelle sein, welche mit dem Montagerahmen in Verbindung steht. Bezüglich der Ausbildung der Elektrodose wird auf die untenstehende Beschreibung bezüglich der Elektrodose verwiesen.

Wie unten im Zusammenhang mit dem anderen Aspekt beschrieben, ermöglicht die Elektrodose, dass, nachdem diese erstmals von einem Elektriker an das elektrische Netz angeschlossen wurde, ein Nicht-Elektriker wie zum Beispiel der Sanitärinstallateur den Sanitärartikel bei dessen Montage selber mit der Elektrodose verbinden kann. Dies gilt nicht nur für die erstmalige Montage des Sanitärartikels, sondern auch bei allfälligen späteren Wartungsarbeiten oder beim Nachrüsten.

Bei den Befestigungseinrichtungen handelt es sich vorzugsweise um Montagelöcher, in welche lasttragende Gewindestangen zur Befestigung des Sanitärartikels eingeführt werden können. Unter der Spülrohr-Aufnahme und dem Befestigungsmittel kann ein Befestigungsmittel verstanden werden, welches das Spülrohr bzw. Abwasserrohr aufnehmen und mit entsprechenden Leitungen des Sanitärartikels verbinden kann.

Wie unten erläutert wird, ist es bevorzugt den Stecker und insbesondere auch die Elektrodose nach deren Befestigung am Montagerahmen frei zugänglich zu belassen. Folglich wird auch der Zwischenraum, in welchem die Elektrodose angeordnet wird, weder verkleidet noch verputzt. Indem der Zwischenraum dabei durch die Spülrohr-Aufnahme, das Befestigungsmittel sowie die erste und zweite Befestigungseinrichtung begrenzt wird, verfügt er über Dimensionen, die bei einem am Montagerahmen befestigen Sanitärartikel von diesem überdeckt werden. So können sowohl ästhetischen als auch praktische Anforderungen gleichzeitig erfüllt werden.

Das Befestigungsmittel ist vorzugsweise eine Rohrschelle, insbesondere eine Rohrschelle einer Montageeinheit wie hierin beschrieben.

Das heisst, bei der Elektrodose und der Rohrschelle des Montagerahmens handelt es sich vorzugsweise um die Elektrodose und Rohrschelle der unten erläuterten Montageeinheit. Weiter ist es bevorzugt, dass auch die Spülrohr-Aufnahme eine Rohrschelle ist, welche mit dem Spülrohr verbunden werden kann. Das Befestigungsmittel kann aber, wie oben beschrieben, auch eine Rohrschelle sein, welche mit dem Montagerahmen in Verbindung steht.

In einem zweiten Aspekt wird ein Verfahren zur Montage eines Sanitärartikels, insbesondere eines WCs oder Dusch-WCs, an einem Montagerahmen wie oben beschrieben, und vorliegend beansprucht, angegeben, mit folgenden Schritten:
- Befestigen der Elektrodose am Montagerahmen,
- Befestigen des Sanitärartikels am Montagerahmen, und
- Elektrisches Verbinden der Elektrodose mit dem Sanitärartikel.

Die Elektrodose kann in einer Variante mit dem unten genannten Befestigungsmittel, welches am Rohr befestigbar ist, ausgebildet sein. In einer alternativen Variante kann die Elektrodose ohne das oben genannte Befestigungsmittel ausgebildet sein, wobei das Rohr dann anderweitig mit dem Montagerahmen verbunden wird.

Die Montageeinheit ermöglicht somit sowohl eine Stromversorgung des Sanitärartikels als auch deren Befestigung an einem Rohr und einem Montagerahmen. Die Montageeinheit erfüllt daher gewissermassen eine Doppelfunktion und bringt den Vorteil, dass eine einzige Einheit für unterschiedliche Funktionen wie Stromversorgung und Befestigung verwendet werden kann. Die Elektrodose ermöglicht dabei, dass, nachdem diese erstmals von einem Elektriker an das elektrische Netz angeschlossen wurde, ein Nicht-Elektriker wie zum Beispiel der Sanitärinstallateur den Sanitärartikel bei dessen Montage selber mit der Elektrodose verbinden kann. Dies gilt nicht nur für die erstmalige Montage des Sanitärartikels, sondern auch bei allfälligen späteren Wartungsarbeiten beziehungsweise beim Nachrüsten. Die Notwendigkeit, einen Elektriker sowie einen Sanitärinstallateur dafür aufbieten zu müssen, entfällt somit bei der vorliegenden Montageeinheit.

Die Elektrodose kann über eine erste Befestigungsstruktur verfügen, mit welcher die Elektrodose an einer komplementär dazu ausgebildeten Befestigungsstruktur am Montagerahmen befestigbar ist.

Vorzugsweise weist die erste Befestigungsstruktur die Form von einem oder mehreren von der Elektrodose hervorstehenden Rastelementen auf, welche in die als Rastaufnahme ausgebildete Befestigungsstruktur am Montagerahmen einrasten. Dadurch kann die Elektrodose lösbar am Montagerahmen befestigt werden und bei Bedarf vom Montagerahmen auch wieder entfernt werden. Wartungsarbeiten an der Elektrodose werden dadurch vereinfacht.

Es ist bevorzugt, dass die Elektrodose über eine zweite Befestigungsstruktur und das Befestigungsmittel über eine komplementär dazu ausgebildete Befestigungsstruktur verfügt, wobei das Befestigungsmittel über seine Befestigungsstruktur an der Elektrodose lagerbar und bezüglich der Elektrodose horizontal verschiebbar ist. Das heisst, die Montageeinheit ist vorzugsweise mehrteilig aufgebaut, wobei die Elektrodose und das Befestigungsmittel separat voneinander ausgebildete und miteinander verbindbare Bauteile sind.

Weiter dienen die zweite Befestigungsstruktur der Elektrodose und die komplementäre Befestigungsstruktur des Befestigungsmittels nicht nur einer Verbindung der Elektrodose mit dem Befestigungsmittel, sondern gestatten auch eine horizontale Verschiebung dieser Bauteile zueinander. Ist die Elektrodose beispielsweise über ihre erste Befestigungsstruktur am Montagerahmen befestigt und über ihre zweite Befestigungsstruktur mit dem Befestigungsmittel verbunden, so kann das Befestigungsmittel nun über seine Befestigungsstruktur in horizontaler Richtung auf die Elektrodose zu oder aber von der Elektrodose wegbewegt werden. Diese Befestigungsstrukturen erlauben also eine Tiefeneinstellung des Befestigungsmittels bezüglich des Montagerahmens. Ist das Befestigungsmittel dabei an einem Rohr befestigt, so erfolgt dabei auch eine Tiefeneinstellung des Rohres.

Vorzugsweise sind die zweite Befestigungsstruktur der Elektrodose und die Befestigungsstruktur des Befestigungsmittels jeweils im Wesentlichen U-förmig ausgebildet, wobei die Seitenschenkel der beiden U-förmigen Befestigungsstrukturen eine geführte Verbindung des Befestigungsmittels mit der Elektrodose ermöglichen.

Insbesondere sind die beiden Seitenschenkel der Befestigungsstruktur des Befestigungsmittels dabei in einem kleineren Abstand zueinander angeordnet als diejenigen der zweiten Befestigungsstruktur der Elektrodose. Dadurch kann die Befestigungsstruktur des Befestigungsmittels beim Verbinden des Befestigungsmittels mit der Elektrodose in der zweiten Befestigungsstruktur der Elektrodose aufgenommen werden. Die Seitenschenkel der zweiten Befestigungsstruktur der Elektrodose dienen dabei als seitliche Führungen und verhindern gleichzeitig ein Verkippen des Befestigungsmittels gegenüber der Elektrodose.

Die Befestigungsstruktur des Befestigungsmittels sowie die zweite Befestigungsstruktur der Elektrodose können jeweils zumindest abschnittsweise über ein Innengewinde verfügen und über ein Verbindungsmittel mit einem Aussengewinde, insbesondere eine Schraube, miteinander verbindbar sein, wobei eine Drehung des Verbindungsmittels um eine Drehachse eine translatorische Bewegung des Befestigungsmittels in horizontaler Richtung bewirkt.

So ist es denkbar, jeweils ein Innengewinde zwischen den beiden Seitenschenkeln der U-förmigen Befestigungsstrukturen vorzusehen, welche, wenn die Schraube zwischen die Seitenschenkel geführt wird, mit dem Aussengewinde der Schraube in einen Gewindeeingriff gehen können. Eine Drehung der Schraube entlang einer ersten Drehrichtung bewirkt dann, dass sich die Befestigungsstruktur und somit das Befestigungsmittel translatorisch entlang dem Aussengewinde der Schraube bewegen. Eine Drehung der Schraube entlang einer der ersten Drehrichtung entgegengesetzten zweiten Drehrichtung führt entsprechend zu einer translatorischen Bewegung des Befestigungsmittels, welche entgegengesetzt zur ersten Bewegungsrichtung ist. Dadurch kann das Befestigungsmittel mittels der Schraube auf einfache und kontrollierte Weise auf die Montagewand ausgerichtet werden.

Das Befestigungsmittel kann in einer anderen Ausführung integral an der Elektrodose angeformt sein. Das heisst, das Befestigungsmittel und die Elektrodose bilden dann eine einstückige Struktur.

Vorzugsweise ist das Befestigungsmittel eine Rohrschelle, welche weiter einen Schellenmantel zur Umschliessung des Abwasserrohres und einen Schliessmechanismus zum Verschliessen des Schellenmantels umfasst, wobei der Schellenmantel und die Befestigungsstruktur der Rohrschelle spiegelsymmetrisch bezüglich einer Spiegelung an einer vertikal durch die Befestigungsstruktur verlaufenden Spiegelebene ausgebildet sind.

Dadurch, dass der Schellenmantel und die Befestigungsstruktur spiegelsymmetrisch ausgebildet sind, ist eine Befestigung der Rohrschelle an der Elektrodose in zwei, jeweils um 180 Grad zueinander verdrehten, Ausrichtungen möglich. Dadurch kann die Befestigungsweise der Rohrschelle abhängig von der Umgebung und den Platzverhältnissen optimal gewählt werden.

Die Elektrodose weist vorzugsweise einen Stecker auf, welcher im Einbauzustand der Montageeinheit wandseitig mit einem Netzkabel verbunden ist und frontseitig mit einem Elektroelement, insbesondere einem Netzteil, verbindbar ist. Dadurch kann die Elektrodose zu einem beliebigen Zeitpunkt mit einem Elektroelement, wie zum Beispiel dem Netzteil des Sanitärartikels verbunden werden, ohne dass ein Elektriker benötigt wird. Auch erlaubt diese Ausgestaltung, defekte Netzteile auf einfache Weise zu entfernen und durch neue zu ersetzen. Vorzugsweise handelt es sich bei der Verbindung zwischen dem Netzteil und dem Stecker um eine elektrische Steckverbindung.

Vorzugsweise ist der Stecker frontseitig im Einbauzustand der Montageeinheit frei zugänglich, und wobei der Stecker frontseitig im Einbauzustand, im Falle eines mit der Elektrodose verbundenen Sanitärartikels, vorzugsweise durch den Sanitärartikel überdeckt wird.

Das heisst, es ist bevorzugt den Stecker und insbesondere auch die Elektrodose nach deren Befestigung am Montagerahmen nicht zu verkleiden oder zu verputzen. Weiter ist es vorteilhaft, den Stecker und vorzugsweise auch die Elektrodose derart am Montagerahmen anzuordnen, dass diese durch einen am Montagerahmen befestigten Sanitärartikel von diesem überdeckt werden. So können der Stecker und die Elektrodose leicht zugänglich und gleichzeitig für einen Benutzer des Sanitärartikels unsichtbar sein.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Montagerahmens mit einer Montageeinheit umfassend eine Elektrodose und eine Rohrschelle, wobei die Rohrschelle ein Abwasserrohr festlegt;
- Fig. 2: eine Vorderansicht des Montagerahmens mit der Montageeinheit gemäss Figur 1;
- Fig. 3: eine Explosionsansicht der Montageeinheit mit Abwasserrohr gemäss Figur 1;
- Fig. 4: eine Vorderansicht der Montageeinheit mit Abwasserrohr gemäss Figur 1;
- Fig. 5: eine perspektivische Ansicht der Montageeinheit gemäss Figur 1;
- Fig. 6: eine Vorderansicht der Montageeinheit gemäss Figur 1, wobei die Rohrschelle um 180 Grad verdreht ist;
- Fig. 7: ein Längsschnitt durch die Montageeinheit der Figur 6 entlang der Schnittlinie A-A;
- Fig. 8: ein Längsschnitt durch die Montageeinheit der Figur 6 entlang der Schnittlinie B-B;
- Fig. 9: ein Längsschnitt durch die Montageeinheit der Figur 6 entlang der Schnittlinie C-C.

### BESCHREIBUNG BEVORZUGTER AUSFÜHRUNGSFORMEN

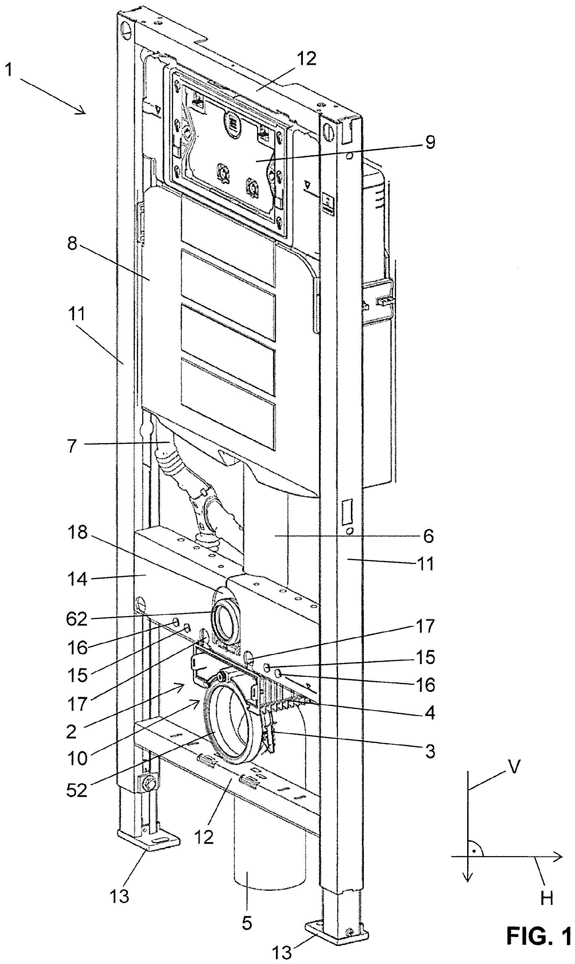

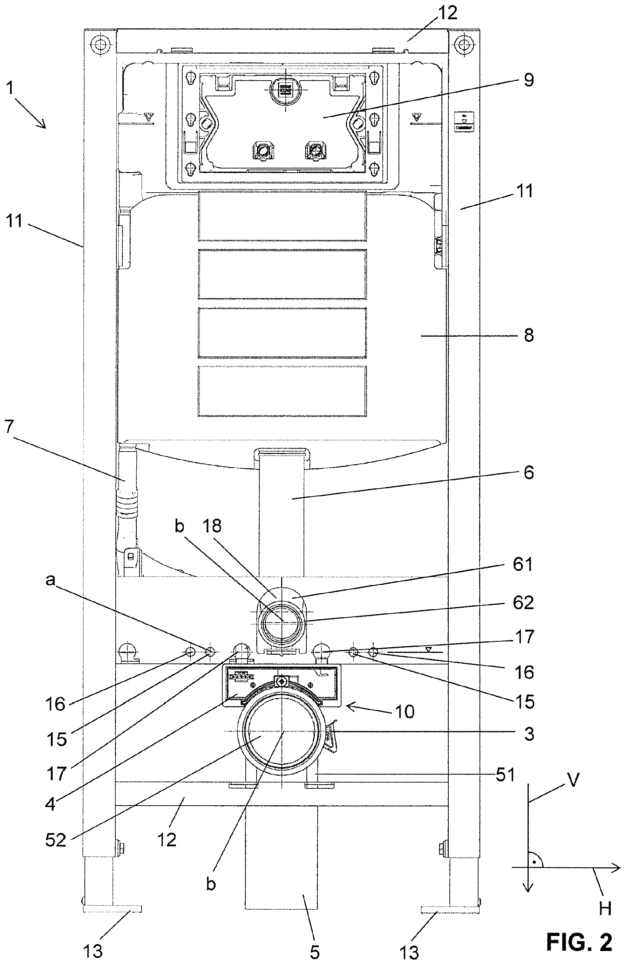

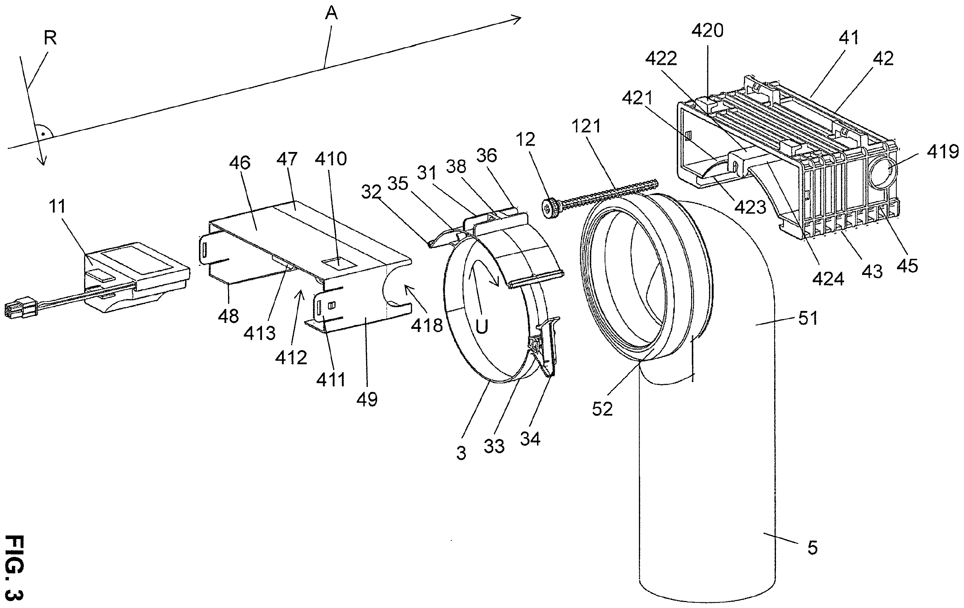

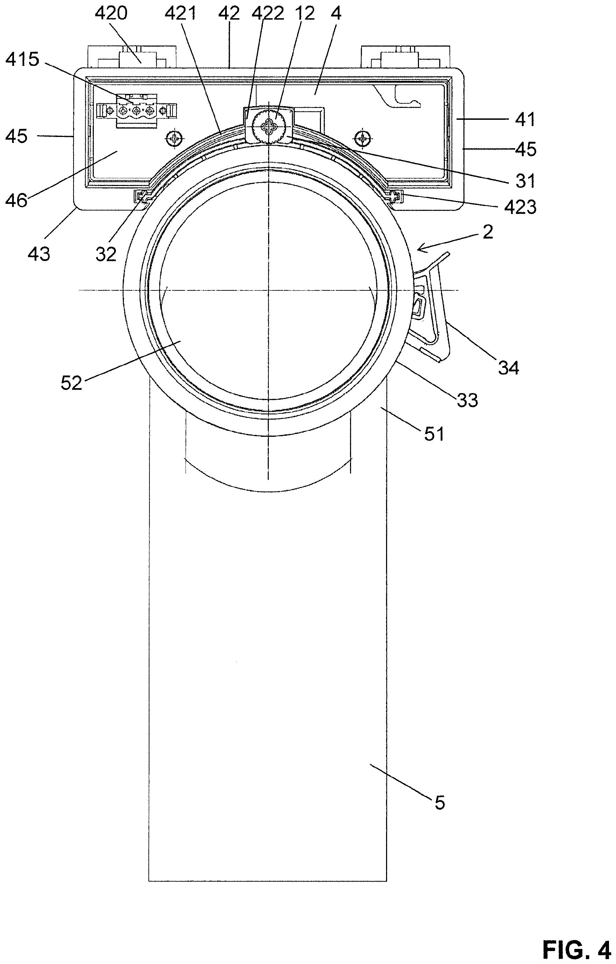

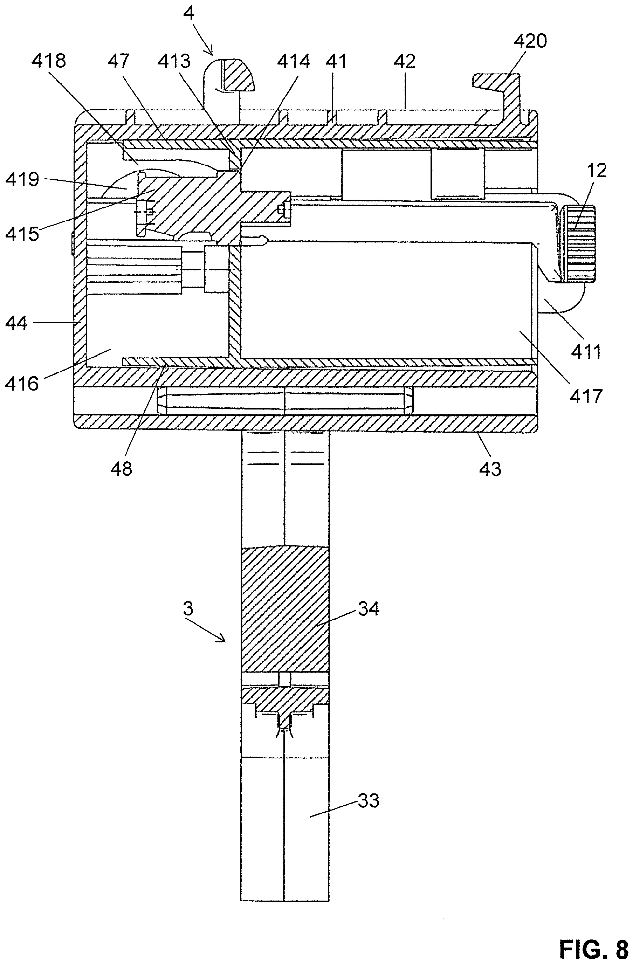

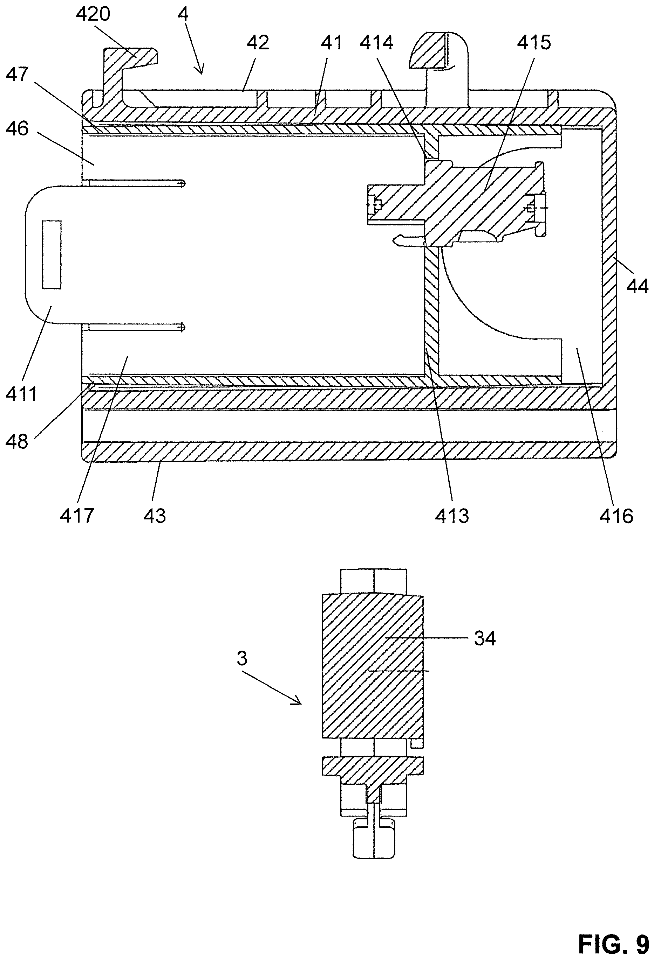

In den Figuren 1 und 2 ist jeweils ein Montagerahmen 1 mit daran befestigter Montageeinheit 2 umfassend ein Befestigungsmittel 3 in Form einer Rohrschelle und eine Elektrodose 4 dargestellt. Am Montagerahmen 1 kann ein Sanitärartikel wie ein WC oder Dusch-WC befestigt werden. Die Montageeinheit 2 wiederum dient mittels der Rohrschelle 3 der Festlegung eines Abwasserrohres 5 und eine Stromversorgung des Dusch-WCs wird über die Elektrodose 4 erreicht. Die genaue Struktur der Rohrschelle 3 und der Elektrodose 4 werden im Zusammenhang mit den Figuren 3 bis 9 eingehend erläutert.

Wie aus den Figuren 1 und 2 hervorgeht, umfasst der Montagerahmen 2 zwei sich entlang einer vertikalen Richtung V erstreckende Vertikalstreben 11 und zwei sich senkrecht zur vertikalen Richtung V, entlang einer horizontalen Richtung H, erstreckende Horizontalstreben 12. Die Vertikalstreben 11 verfügen in dem hier gezeigten Beispiel über teleskopierbare Füsse 13, welche eine Höheneinstellung des Montagerahmens 1 erlauben. Zwischen den beiden Horizontalstreben 12 ist ein sich ebenfalls in horizontaler Richtung H erstreckendes Montageblech 14 mit einer Vielzahl von Öffnungen 15, 16, 17 eingesetzt. Diejenigen Öffnungen, welche sich in einem dem Boden zugewandten unteren Bereich des Montageblechs 14 befinden, dienen als Montagelöcher 15, 16 für die Befestigung des Sanitärartikels am Montagerahmen 1 beziehungsweise bilden einen Auslass 17 für Duschwasserleitungen 7. Die Montagelöcher 15, 16 weisen einen kleineren Durchmesser als die Auslassöffnungen 17 für die Duschwasserleitungen 7 auf, wobei sich die Auslassöffnungen 17 zwischen jeweils zwei äusseren Montagelöcher 16 und zwei inneren Montagelöcher 15 befinden. Zudem weist das Montageblech 14 mittig eine Ausnehmung 18 auf, welche einen Auslass für das Spülrohr 6 bildet.

Das Abwasserrohr 5 verfügt über ein Winkelrohrstück 51, welches mit einem hier nicht dargestellten Abwasserleitungs-Rohrstutzen im Sanitärapparat verbunden werden kann. Der abgewinkelte Bereich des Winkelrohrstücks 51 befindet sich dabei zwischen der unteren Horizontalstrebe 12 und dem Montageblech 14 und kann über ein Befestigungsmittel 3, welche das Abwasserrohr 5 zum Ableiten von Abwasser aus dem Sanitärartikel aufnimmt, mit dem Abwasserleitungs-Rohrstutzen des Sanitärapparats verbunden werden. Das Befestigungsmittel 3 kann somit auch als Befestigungsmittel, zum Beispiel in Form einer Rohrschelle, zur Befestigung des Abwasserrohres 5 angesehen werden. Auch das Spülrohr 6 verfügt über ein Winkelrohrstück 61, welches mit einem hier nicht dargestellten Spülwasserzuleitungs-Rohrstutzen im Sanitärapparat verbunden werden kann. Der abgewinkelte Bereich dieses Winkelrohrstücks 61 erstreckt sich dabei durch die mittige Ausnehmung 18 im Montageblech 14 und kann über eine Spülrohr-Aufnahme, welche das Spülrohr 6 zum Zuleiten von Spülwasser in den Sanitärartikel aufnimmt, mit dem Spülwasserzuleitungs-Rohrstutzen im Sanitärapparat verbunden werden. Die Spülrohr-Aufnahme kann somit ebenfalls als Befestigungsmittel, zum Beispiel in Form einer Rohrschelle, zur Befestigung des Spülrohrs 6 angesehen werden.

Die Duschwasserleitungen 7 sowie das Spülrohr 6 sind jeweils mit einem Spülkasten 8 verbunden, welcher im Montagerahmen 1 aufgehängt ist. Oberhalb des Spülkastens 8 befindet sich ein Betätigungsmechanismus 9, dessen Betätigung einen Spülvorgang bewirkt. An der dem Boden zugewandten Unterseite ist das Montageblech 14 mit der Elektrodose 4 verbunden. Die Elektrodose 4 befindet sich hierbei also in einem Zwischenraum 10, welcher durch die Spülrohr-Aufnahme und das Befestigungsmittel 3 bzw. das darin liegende Abwasserrohr sowie die Montagelöcher 15, 16 begrenzt wird. Im vorliegenden Beispiel wird der Zwischenraum 10 durch die inneren Montagelöcher 15 definiert. Es ist jedoch genauso denkbar, dass die äusseren Montagelöcher den Zwischenrum seitlich begrenzen.

Mit anderen Worten gesagt wird der Zwischenraum 10 durch zwei senkrechte Ebenen, welche sich entlang der Mittellinien a der Montageöffnungen erstrecken, und durch zwei horizontale Ebenen, welche orthogonal zu diesen senkrechten Ebenen stehen und horizontal durch die Spülrohr-Aufnahme und das Befestigungsmittel verlaufen, definiert. Unter der Mittellinie a, welche sich durch die Montageöffnung erstreckt, ist eine sich zentral durch die Montageöffnung 15, 16 hindurch erstreckende longitudinale Achse zu verstehen. Analog ist unter einer Mittellinie b der Spülrohr-Aufnahme sowie das Befestigungsmittel eine sich zentral durch die Spülrohr-Aufnahme bzw. das Befestigungsmittel hindurch erstreckende longitudinale Achse zu verstehen. Die Mittellinien a, b respektive Achsen der Montageöffnungen sowie der Spülrohr- Aufnahme bzw. der Befestigungsmittel verlaufen parallel zueinander. Eine Definition des Zwischenraums 10 kann anstelle über die Spülrohr-Aufnahme und das Befestigungsmittel auch über das mit dem Spülwasserzuleitungs-Rohrstutzen beziehungsweise Abwasserleitungs-Rohrstutzen zu verbindende Spülrohr-Endstück 62 beziehungsweise Abwasserrohr-Endstück 52 erfolgen, insoweit es gilt: Unter dem Spülrohr-Endstück 62 und dem Abwasserrohr-Endstück 52 wird hierbei der entlang der horizontalen Richtung H, parallel zur Mittellinie a der Montageöffnungen verlaufende abgewinkelte Endbereich der obgenannten Winkelrohrstücke 51, 61 verstanden. Wie die Spülrohr-Aufnahme und das Befestigungsmittel 3 weisen auch das Spülrohr-Endstück 62 und Abwasserrohr-Endstück 52 jeweils eine zentral durch das Spülrohr-Endstück und Abwasserrohr-Endstück verlaufende Achse auf, welche als Mittellinie bezeichnet werden kann und mit der Mittellinie b der Spülrohr-Aufnahme respektive das Befestigungsmittel zusammenfällt. Der Abstand zwischen den Mittellinien a der inneren Montagelöchern 15 beträgt zwischen 150 und 250 Millimeter, und/oder der Abstand zwischen den Mittellinien a der inneren Montagelöchern 15 und der Mittellinie b des Spülrohr-Endstücks 62 beträgt zwischen 20 und 50 Millimeter. Weiter kann der Abstand zwischen den Mittellinien a der inneren Montagelöcher 15 und der Mittellinie b des Abwasserrohr-Endstücks 52 zwischen 80 und 120 Millimeter betragen, und/oder der Abstand zwischen den Mittellinien b des Spülrohr-Endstücks 62 und des Abwasserrohr-Endstücks 52 beträgt zwischen 120 und 150 Millimeter. Bevorzugt beträgt der Abstand zwischen den Mittellinien a der inneren Montagelöchern 15 180 Millimeter oder 230 Millimeter und der Abstand zwischen den Mittellinien a der inneren Montagelöchern 15 und der Mittellinie b des Spülrohr-Endstücks 62 35 Millimeter. Ebenfalls bevorzugt ist der Abstand zwischen den Mittellinien a der inneren Montagelöcher 15 und der Mittellinie b des Abwasserrohr-Endstücks 52 100 Millimeter, und der Abstand zwischen den Mittellinien b des Spülrohr-Endstücks 62 und des Abwasserrohr-Endstücks 52 beträgt 135 Millimeter. Diese Befestigungsmasse entsprechen dabei der Norm DIN EN 33:2011-11.

Der Zwischenraum 10 ist dabei derart im Montagerahmen 1 ausgebildet, dass er im Einbauzustand des Montagerahmens 1 im Falle eines mit dem Montagerahmen 1 verbundenen Sanitärartikels durch den Sanitärartikel überdeckt wird, ohne dass eine zusätzlich Abdeckung oder ein Einbinden des Zwischenraums 10 in das Bauwerk beispielsweise durch Verputzen oder Verkleiden notwendig ist. Entsprechend liegt der Zwischenraum 10 nach Entfernen des Sanitärartikels sofort wieder frei und ist von aussen zugänglich. Gleiches gilt natürlich für eine im Zwischenraum 10 angeordnete Elektrodose 4. Dies bringt den Vorteil, dass Wartungsarbeiten an der Elektrodose 4 einfach und mit kleinem Aufwand möglich sind.

Wie weiter aus den Figuren 1 und 2 hervorgeht, ist die Elektrodose 4 mit dem Montagerahmen 1, hier mit dem Montageblech 14, und mit der Rohrschelle 3 verbunden, welche am Abwasserrohr 5 angebracht ist. In diesem Zustand ist das Abwasserrohr 5 festgelegt und eine Stromversorgung des Sanitärartikels kann erfolgen.

Wie insbesondere in Figur 3 ersichtlich ist, kann die Elektrodose 4 zweiteilig ausgebildet sein und über einen Aussenteil 41 verfügen, in welchen ein Innenteil 46 aufgenommen wird. Der Aussenteil 41 der Elektrodose 4 ist im Wesentlichen rechteckig ausgebildet und verfügt über eine mit dem Montagerahmen 1 zu verbindende Oberseite 42, eine mit dem Befestigungsmittel 3 zu verbindende Unterseite 43, eine Hinterseite 44 sowie zwei seitliche Seiten 45. Damit die Oberseite 42 des Aussenteils 41 mit dem Montagerahmen 1 verbunden werden kann, sind Befestigungsmittel 420 in Form von Rastnasen vorgesehen, welche sich von der Oberseite 42 des Aussenteils 41 nach aussen weg erstrecken und dazu ausgebildet sind, in entsprechende Ausnehmungen im Montagerahmen einzugreifen, um so den Aussenteil 41 der Elektrodose 4 am Montagerahmen 1 zu befestigen. Insbesondere wird hier der Aussenteil 41 am Montageblech 14 des Montagerahmens 1 befestigt, wobei das Montageblech auf seiner der Elektrodose 4 zugewandten Unterseite vorzugsweise über komplementär zu den Rastnasen ausgebildete Rastöffnungen aufweist, in welche die Rastnasen eingreifen oder einschnappen können. Auf seiner Unterseite weist der Aussenteil 41 eine Verformung 421 auf, welche die Form eines Zylindersegments aufweist und der Aussenform des Abwasserrohrs 5 nachgebaut ist. Die Verformung 421 erstreckt sich hier longitudinal durch die gesamte Unterseite 41 des Aussenteils 41 hindurch und weist im Querschnitt die Form eines Kreisbogens auf. Wie nachstehend genau erläutert wird, ist eine Befestigungsstruktur 422 zur Befestigung des Aussenteils 41 der Elektrodose 4 mit einer entsprechenden Befestigungsstruktur 31 am Befestigungsmittel 3, hier der Rohrschelle vorgesehen, welche sich mittig jeweils am Ort des maximalen Abstands des Kreisbogens von der Kreissehne der bogenförmigen Verformung 421 entlang der Verformung erstreckt. Am Ort des Übergangs von den beiden parallel zur Oberseite 42 des Aussenteils 41 verlaufenden Bereichen der Unterseite 43 zu der bogenförmigen Verformung 421 sind weiter sich in eine Wand des Aussenteils 41 erstreckende Nuten 423 vorgesehen. In diese Nuten 423 werden beim Verbinden des Befestigungsmittels 3 mit dem Aussenteil 41 entsprechend ausgebildete radial nach aussen vorstehende Rippen 32 am Befestigungsmittel 3 aufgenommen. Die Unterseite des Aussenteils 43 weist also zwei Befestigungs- oder Verbindungsstrukturen 422, 423 zur Befestigung des bzw. Verbindung mit dem Befestigungsmittel 3 auf.

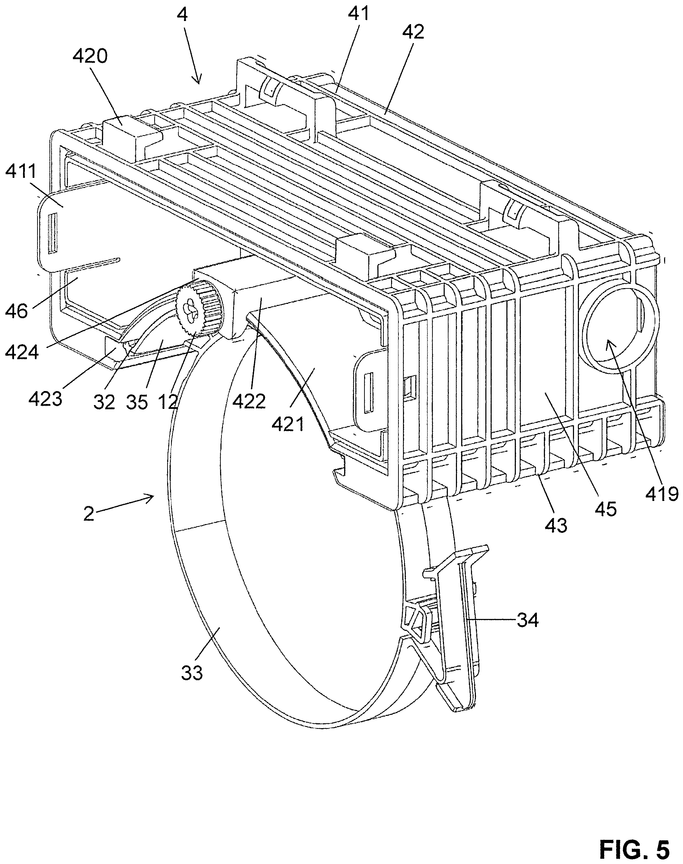

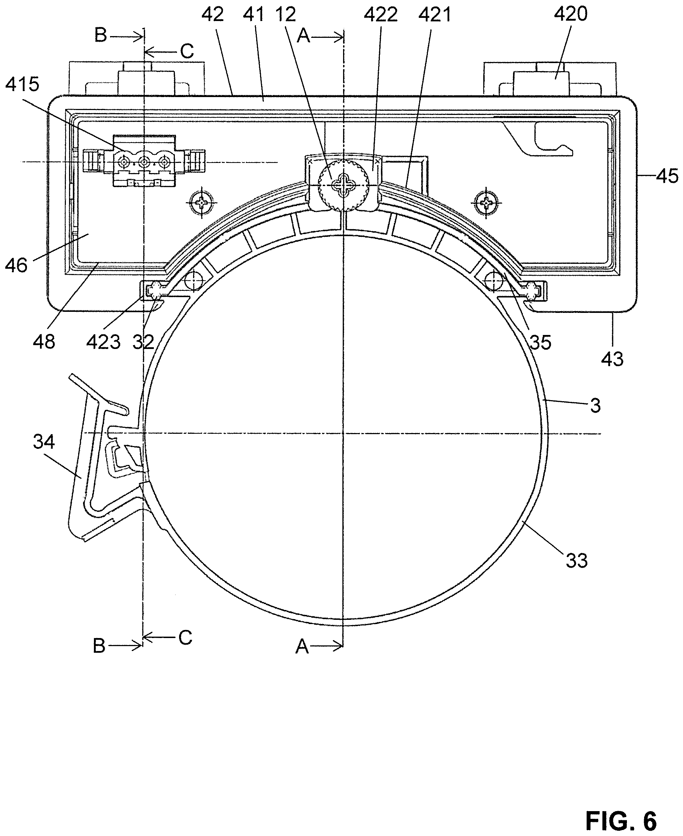

Einerseits ist dies die im Wesentlichen U-förmig ausgebildete Befestigungsstruktur 422, welche sich mittig entlang der bogenförmigen Verformung 421 erstreckt. Diese Befestigungsstruktur 422 ist mit der ebenfalls im Wesentlichen U-förmig ausgebildeten Befestigungsstruktur 31 am Befestigungsmittel 3 verbindbar. Im vorliegenden Fall handelt es sich beim Befestigungsmittel 3 um eine Rohrschelle, welche einen Schellenmantel 33 zur Umschliessung des Abwasserrohres 5 und einen Schliessmechanismus 34 zum Verschliessen des Schellenmantels 33 umfasst. Insbesondere ist die Rohrschelle eine Bandrohrschelle 3, welche ein beschichtetes, flexibles Band 33 und einen Rastverschluss 34 aufweist. Der Schellenmantel 33 und die Befestigungsstruktur 31 der Rohrschelle 3 sind dabei spiegelsymmetrisch bezüglich einer Spiegelung an einer vertikal durch die Befestigungsstruktur 31 verlaufenden Spiegelebene ausgebildet. Dies ermöglicht, dass die Rohrschelle um jeweils 180 Grad verdreht an der Elektrodose 4 befestigt werden kann, wie beispielsweise durch einen Vergleich der Figuren 5 und 6 hervorgeht.

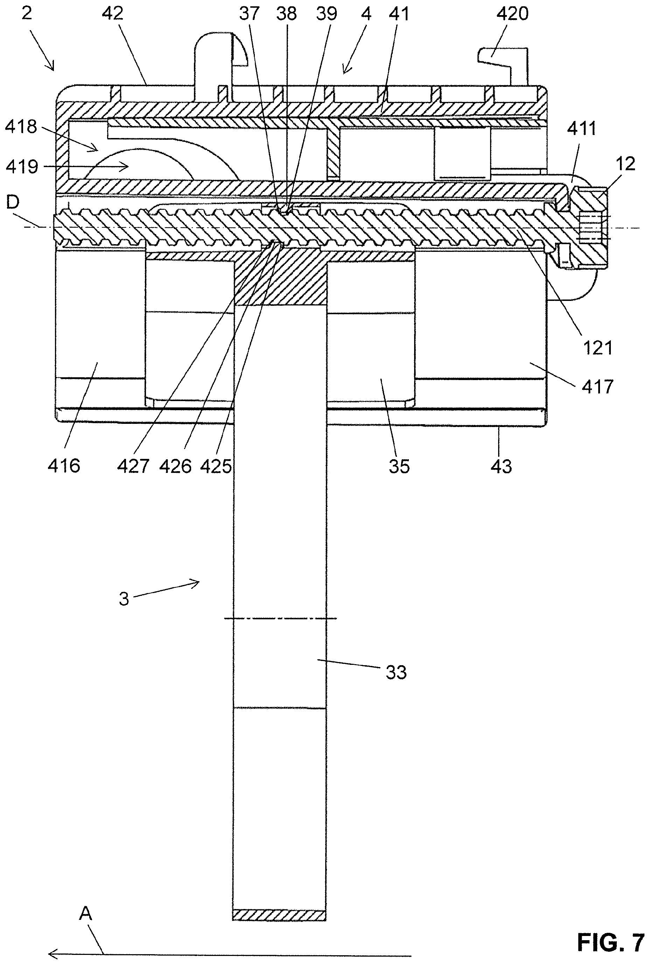

Der Schellenmantel 33 verfügt weiter über einen gekrümmten Flansch 35, welcher sich zumindest teilweise entlang der Umfangsrichtung U des Schellenmantels 33 erstreckt. Weiter erstreckt sich der Flansch 35 bezüglich einer axial zur zentralen Achse der Rohrschelle 3 verlaufenden axialen Richtung A wie auch bezüglich einer senkrecht zu dieser axialen Richtung A verlaufenden radialen Richtung R über den Schellenmantel 33 hinaus. Anders gesagt ist die Fläche des Flansches 35 grösser als dessen Auflagefläche auf dem Schellenmantel 33. Die Krümmung des Flansches 35 entspricht dabei in etwa der Krümmung der bogenförmigen Verformung 421 des Aussenteils 41. Die U-förmige Befestigungsstruktur 31 befindet sich mittig auf einer Oberfläche des Flansches 35 und erstreckt sich entlang der gesamten Breite dieser Oberfläche. Wie weiter gut in Figur 3 ersichtlich ist, stehen sich die U-förmige Befestigungsstruktur 31 der Rohrschelle 3 und die U-förmige Befestigungsstruktur 422 der Elektrodose 4 bei deren Verbindung miteinander um 180 Grad verdreht zueinander gegenüber. Weiter ist der Abstand zwischen den beiden Seitenschenkel 36 der U-förmigen Befestigungsstruktur 31 der Rohrschelle 3 kleiner als der Abstand der beiden Seitenschenkel 424 der U-förmigen Befestigungsstruktur 422 der Elektrodose 4, so dass die Befestigungsstruktur 31 der Rohrschelle 3 in der Befestigungsstruktur 422 der Elektrodose 4 aufnehmbar ist. Vorzugsweise ist der Abstand der Seitenschenkel 36 der Befestigungsstruktur 31 der Rohrschelle 3 dabei gerade um so viel kleiner, um eine Berührung zwischen der Aussenseite der Seitenschenkel 36 der Befestigungsstruktur 31 der Rohrschelle 3 und der Innenseite der Seitenschenkel 424 der Befestigungsstruktur 422 der Elektrodose 4 zu ermöglichen. Dadurch wird eine geführte Verbindung der beiden Befestigungsstrukturen 422, 31 ermöglicht während gleichzeitig ein Verkippen der Rohrschelle 3 gegenüber der Elektrodose 4 verhindert wird. Um eine fixe Verbindung der beiden Befestigungsstrukturen 422, 31 zu gewährleisten verfügen die Befestigungsstrukturen 422, 31 zumindest abschnittsweise über ein Innengewinde 425, 37 und es ist ein Verbindungsmittel 12 mit einem Aussengewinde 121 vorgesehen, welches mit den beiden Innengewinden 425, 37 in einen Gewindeeingriff gehen kann. Dazu weisen die Befestigungsstrukturen 422, 31 jeweils einen Steg 426, 38 auf, welcher sich jeweils durch die U-förmige Ausnehmung von dem einen Seitenschenkel 424, 36 zum anderen Seitenschenkel 424, 36 der U-förmigen Befestigungsstruktur 422, 31 erstreckt. Der Steg 426, 38 weist eine zentrale Durchgangsöffnung 427, 39 mit einem Innengewinde 425, 37 auf, durch welche das Verbindungsmittel 12 hindurch geführt werden kann. Wie insbesondere in Figur 7 ersichtlich ist, sind die Stege 426, 38 in den beiden Befestigungsstrukturen 422, 31 bezüglich der zentralen Achse versetzt zueinander angeordnet. Beispielsweise können die beiden Stege 426, 38 derart versetzt zueinander in der jeweiligen Befestigungsstruktur 422, 31 angeordnet sein, dass sie im Falle der miteinander verbundenen Befestigungsstrukturen unmittelbar aneinander angrenzen (siehe Figur 7). Der Steg 426 der Befestigungsstruktur 422 der Elektrodose 4 bildet somit einen Anschlag für den Steg 38 der Befestigungsstruktur 31 der Rohrschelle 3 bezüglich einer horizontalen Bewegung der Rohrschelle 3 in axialer Richtung A. Beim Verbindungsmittel 12 handelt es sich vorzugsweise um eine Schraube, welche jeweils in das Innengewinde 425, 37 in den Durchgangsöffnungen 427, 39 der Stege 426, 38 eingedreht werden kann. Der Gewindeeingriff zwischen der Gewindestange 121 der Schraube 12 und den Innengewinde 425, 37 der Befestigungsstrukturen 422, 31 führt dazu, dass eine Drehung der Schraube 12 um eine Drehachse D entlang einer ersten Drehrichtung eine translatorische Bewegung der Rohrschelle in axialer Richtung A bewirkt. Die Drehbewegung kann solange ausgeführt werden, bis die Rohrschelle 3 vollständig in der bogenförmigen Verformung 421 der Unterseite 43 der Elektrodose 4 aufgenommen ist. Dabei ist auch die Befestigungsstruktur 31 der Rohrschelle 3 vollständig in der Befestigungsstruktur 422 der Elektrodose 4 aufgenommen, wobei der Steg 38 der Befestigungsstruktur 31 der Rohrschelle 3 am Steg 426 der Befestigungsstruktur 422 der Elektrodose 4 anschlägt. Wird nun eine der ersten Drehbewegung entgegengesetzte zweite Drehbewegung durchgeführt, so bewegt sich die Rohrschelle 3 entsprechend in entgegengesetzter axialer Richtung A weg von der Elektrodose 4. Die Ausgestaltung der Befestigungsstrukturen 422, 31, insbesondere deren Gewindeeingriff mit der Schraube 12 ermöglicht somit eine stufenlose Positionseinstellung oder Tiefeneinstellung der Rohrschelle 3 in axialer Richtung A. Indem die Rohrschelle 3 dabei am Abwasserrohr 5 befestigt ist, kann über die Drehbewegung der Schraube 12 somit auch eine Tiefeneinstellung des Abwasserrohres 5erfolgen.

Wie erwähnt weist die Unterseite 43 des Aussenteils 41 zwei Befestigungs- oder Verbindungsstrukturen zur Befestigung des bzw. Verbindung mit dem Befestigungsmittel 3 auf. Nebst der im Wesentlichen U-förmig ausgebildeten Befestigungsstruktur 422 sind dies die Nuten 423, welche sich seitlich entlang der bogenförmigen Verformung 421 in der Wand des Aussenteils 41 erstrecken. In diese Nuten 423 greifen die radial nach aussen vorstehenden Rippen 32 am Flansch der Rohrschelle, welche sich parallel zueinander sowie parallel zu den Seitenschenkeln 36 der U-förmigen Befestigungsstruktur 31 der Rohrschelle 3 erstrecken. Die Rippen 32 werden beim Verbinden der Rohschelle 3 mit der Elektrodose 4 geführt in den Nuten 423 der Elektrodose 4 aufgenommen. Die Rippen 32 erstrecken sich vorzugsweise ebenso wie die U-förmige Befestigungsstruktur 31 entlang der gesamten Breite des Flansches 35. Die Breite des Flansches 35 wiederum entspricht vorzugsweise der gesamten Breite des Aussenteils 41. Dadurch wird eine geführte Verbindung entlang der gesamten Tiefe der Elektrodose 4 bereitgestellt.

Wie eingangs erwähnt ist die Elektrodose zweiteilig ausgebildet und verfügt über einen Aussenteil 41 und einen Innenteil 46, wobei der Innenteil 46 vorzugsweise lösbar im Aussenteil 41 aufnehmbar ist. Der Innenteil verfügt über eine im Wesentlichen rechteckige Grundstruktur mit einer Oberseite 47, einer Unterseite 48 und zwei seitlichen Seiten 49.. Beide seitlichen Seiten 49 des Innenteils 46 verfügen über hervorstehende Laschen 411, welche von einem Benutzer ergriffen werden können und dadurch ein Entfernen des Innenteils 46 aus dem Aussenteil 41 erleichtern. Die Unterseite 48 des Innenteils 46 weist eine weitere Ausnehmung 412 auf, durch welche sich die bogenförmige Ausnehmung des Aussenteils 41 mit dessen Befestigungsstruktur sowie der bogenförmige Flansch der Rohrschelle 3 mit dessen Befestigungsstruktur in den Innenteil 46 erstrecken können.

Weiter weist das Innenteil 46 in seinem Inneren eine Begrenzungsstruktur 413 in Form einer Begrenzungswand auf, welche sich von einer der seitlichen Seiten 49 zur anderen der seitlichen Seiten 49 erstreckt und so den Innenteil 46 in zwei Bereiche unterteilt. Ein hinterer Bereich 416 befindet sich bei einem im Aussenteil 41 eingesetzten Innenteil 42 zwischen der Begrenzungswand 413 und der Hinterseite 44 des Aussenteils 41, und ein vorderer Bereich 417 befindet sich zwischen der Begrenzungswand 413 und einer offenen Vorderseite des Innenteils 46. Wie insbesondere aus den Figuren 7 bis 9 hervorgeht, verfügt die Begrenzungswand 413 über eine Ausnehmung 414, in welche ein Stecker 415 eingesetzt werden kann. Der Stecker 415 kann rückseitig beziehungsweise wandseitig, im hinteren Bereich 416 des Innenteils 46, mit einem Netzkabel verbunden werden. Frontseitig, also im vorderen Bereich 417 des Innenteils 46, kann der Stecker 415 mit einem Elektroelement 11 wie beispielsweise einem Netzteil der Sanitäranlage verbunden werden. Zumindest eine der seitlichen Seiten 49 des Innenteils 46 weist hierfür eine Ausnehmung 418 auf, welche im Falle von einem im Aussenteil 41 eingesetzten Innenteil 46 neben einer Öffnung 419 in einer seitlichen Seite 45 des Aussenteils 41 zu liegen kommt. Dadurch verfügt die Elektrodose 4 über eine durchgehende Öffnung, durch welche ein Netzkabel über die Öffnung 419 im Aussenteil 41 und die Ausnehmung 418 im Innenteil 46 ins Innere der Elektrodose 4 eingeführt und dort mit dem Stecker 415 des Innenteils 46 verbunden werden kann. Die Begrenzungswand 413 verhindert dabei, dass ein Benutzer mit einer Hand oder einem Werkzeug an den unter hoher Spannung stehenden Stecker 415 oder das Netzkabel im hinteren Bereich 416 gelangen kann. Ein Auswechseln des Netzteils 11 hingegen ist ohne weiteres möglich, indem das frühere Netzteil frontseitig aus dem Stecker 415 gezogen und durch ein neues ersetzt wird. Diese Ausgestaltung ermöglicht somit ein sicheres und einfaches Anschliessen von Verbrauchern wie eines Dusch-WCs an die Elektrodose 4. Ein weiterer Vorteil besteht darin, dass das Anschliessen direkt durch den Monteur des Sanitätsartikels erfolgen kann und die Notwendigkeit, einen Elektriker hierfür bestellen zu müssen, dadurch entfällt. Dies erlaubt nicht nur eine effizientere, sondern auch kostengünstigere Montage.

Der Arbeitsaufwand wird weiter dadurch reduziert, dass der Stecker 415 frontseitig im Einbauzustand der Montageeinheit 2 frei zugänglich ist und, im Falle eines mit der Elektrodose 4 verbundenen Sanitärartikels, durch den Sanitärartikel überdeckt wird. Dies ist darauf zurückzuführen, dass der Zwischenraum 10, und dadurch auch die im Zwischenraum 10 aufgenommene Elektrodose 4, derart im Montagerahmen 1 angeordnet, dass er im Einbauzustand des Montagerahmens 1 im Falle eines mit dem Montagerahmen 1 verbundenen Sanitärartikels durch den Sanitärartikel überdeckt wird, ohne dass eine zusätzlich Abdeckung oder ein Einbinden des Zwischenraums in das Bauwerk beispielsweise durch Verputzen oder Verkleiden notwendig ist.

### BEZUGSZEICHENLISTE

- 1: Montagerahmen
- 11: Vertikalstreben
- 12: Horizontalstreben
- 13: teleskopierbare Füsse
- 14: Montageblech
- 15: innere Montagelöcher
- 16: äussere Montagelöcher
- 17: Auslassöffnungen
- 18: Ausnehmung

- 2: Montageeinheit

- 3: Befestigungsmittel
- 31: Befestigungsstruktur
- 32: Rippen
- 33: Schellenmantel
- 34: Schliessmechanismus
- 35: Flansch
- 36: Seitenschenkel
- 37: Innengewinde
- 38: Steg
- 39: Durchgangsöffnung

- 4: Elektrodose
- 41: Aussenteil
- 42: Oberseite
- 43: Unterseite
- 44: Hinterseite
- 45: seitliche Seiten
- 46: Innenteil
- 47: Oberseite
- 48: Unterseite
- 49: seitlichen Seiten
- 410: Ausnehmung
- 411: Laschen
- 412: Ausnehmung
- 413: Begrenzungsstruktur
- 414: Ausnehmung
- 415: Stecker
- 416: hinterer Bereich
- 417: vorderer Bereich
- 418: Ausnehmung
- 419: Öffnung
- 420: Befestigungsstruktur
- 421: Verformung
- 422: Befestigungsstruktur
- 423: Nuten
- 424: Seitenschenkel
- 425: Innengewinde
- 426: Steg
- 427: Durchgangsöffnung

- 5: Abwasserrohres
- 51: Winkelrohrstück
- 52: Abwasserrohr-Endstück

- 6: Spülrohr
- 61: Winkelrohrstück
- 62: Spülrohr-Endstück

- 7: Duschwasserleitungen
- 8: Spülkasten
- 9: Betätigungsmechanismus
- 10: Zwischenraum
- 11: Elektroelement
- 12: Verbindungsmittel
- 121: Aussengewinde

- V: vertikale Richtung
- H: horizontale Richtung
- U: Umfangsrichtung
- A: axiale Richtung
- R: radiale Richtung
- D: Drehachse

- a: Mittellinien der Montageöffnungen
- b: Mittellinie der Spülrohr-Aufnahme und des Befestigungsmittels

## Patentansprüche

1. Montagerahmen (1) für einen Sanitärartikel, insbesondere ein WC oder Dusch-WC, umfassend:
- eine Spülrohr-Aufnahme zur Aufnahme eines Spülrohrs (6) zum Zuleiten von Spülwasser in den Sanitärartikel;
- ein Befestigungsmittel (3) zur Aufnahme und Befestigung eines Abwasserrohrs (5) zum Ableiten von Abwasser aus dem Sanitärartikel am Montagerahmen (1); und
- mindestens eine erste und eine zweite Befestigungseinrichtung (15; 16) zur Befestigung des Sanitärartikels am Montagerahmen (1);
wobei die Spülrohr-Aufnahme, das Befestigungsmittel (3) sowie die erste und zweite Befestigungseinrichtung (15; 16) einen Zwischenraum (10) definieren,
wobei der Zwischenraum (10) durch zwei senkrechte Ebenen, welche senkrecht durch die erste beziehungsweise zweite Befestigungseinrichtung (15; 16) verlaufen, und durch zwei horizontale Ebenen, welche horizontal durch die Spülrohr-Aufnahme beziehungsweise das Befestigungsmittel (3) verlaufen, definiert ist, und
wobei eine Elektrodose (4) zur Stromversorgung des Sanitärartikels im Zwischenraum (10) angeordnet ist.

2. Montagerahmen (1) nach Anspruch 1, **dadurch gekennzeichnet, dass** der Zwischenraum (10) derart angeordnet ist, dass er im Einbauzustand des Montagerahmens (1) frei zugänglich ist, und wobei der Zwischenraum (10) im Einbauzustand, im Falle eines mit dem Montagerahmen (1) verbundenen Sanitärartikels, vorzugsweise durch den Sanitärartikel überdeckbar ist.

3. Montagerahmen (1) nach einem der Ansprüche 1 bis 2, **dadurch gekennzeichnet, dass** das Befestigungsmittel (3) eine Rohrschelle (3) ist, welche mit dem Montagerahmen in Verbindung steht.

4. Montagerahmen (1) nach einem der Ansprüche 1 bis 3, **dadurch gekennzeichnet, dass** die Elektrodose (4) am Montagerahmen (1) befestigt ist.

5. Verfahren zur Montage eines Sanitärartikels, insbesondere eines WCs oder Dusch-WCs, an einem Montagerahmen (1) nach einem der Ansprüche 1 bis 4, **gekennzeichnet durch** die Schritte:
- Befestigen der Elektrodose (4) am Montagerahmen (1),
- Befestigen des Sanitärartikels am Montagerahmen (1), und
- Elektrisches Verbinden der Elektrodose (4) mit dem Sanitärartikel.

## Claims

1. Mounting frame (1) for a sanitary article, in particular a WC or shower WC, comprising:
- a flush pipe receptacle for receiving a flush pipe (6) for supplying flush water to the sanitary article;
- a fastening means (3) for receiving and fastening a waste water pipe (5) for discharging waste water from the sanitary article to the mounting frame (1); and
- at least a first and a second fastening means (15; 16) for fastening the sanitary article to the mounting frame (1);
wherein the flush pipe receptacle, the fastening means (3), and the first and second fastening means (15; 16) define an intermediate space (10),
wherein the intermediate space (10) is defined by two vertical planes which extend vertically through the first and second fastening means (15; 16), respectively, and by two horizontal planes which extend horizontally through the flush pipe receptacle and the fastening means (3), respectively,
and wherein an electrical box (4) for supplying power to the sanitary article is arranged in the intermediate space (10).

2. Mounting frame (1) according to claim 1, **characterized in that** the intermediate space (10) is arranged in such a way that it is freely accessible in the installed state of the mounting frame (1), and wherein the intermediate space (10) in the installed state, in the case of a sanitary article connected to the mounting frame (1), can preferably be covered by the sanitary article.

3. Mounting frame (1) according to one of the claims 1 to 2, **characterized in that** the fastening means (3) is a pipe clamp (3) which is connected to the mounting frame.

4. Mounting frame (1) according to one of the claims 1 to 3, **characterized in that** the electrical box (4) is fixed to the mounting frame (1).

5. Method for mounting a sanitary article, in particular a WC or shower WC, on a mounting frame (1) according to one of claims 1 to 4, **characterized by** the steps:
- Fastening the electrical box (4) to the mounting frame (1),
- fastening the sanitary article to the mounting frame (1), and
- Electrically connecting the electrical box (4) to the sanitary article.

## Revendications

1. Cadre de montage (1) pour un article sanitaire, notamment un WC ou un WC lavant, comprenant
- un logement de tube de rinçage pour recevoir un tube de rinçage (6) pour amener l'eau de rinçage dans l'article sanitaire ;
- un moyen de fixation (3) pour recevoir et fixer un tuyau d'évacuation (5) pour évacuer les eaux usées de l'article sanitaire au cadre de montage (1) ; et
- au moins un premier et un deuxième dispositif de fixation (15; 16) pour fixer l'article sanitaire au cadre de montage (1) ;
dans lequel le logement de tube de rinçage, le moyen de fixation (3) et les premier et deuxième dispositifs de fixation (15; 16) définissent un espace intermédiaire (10),
l'espace intermédiaire (10) étant défini par deux plans verticaux qui s'étendent verticalement à travers le premier ou le deuxième dispositif de fixation (15 ; 16), respectivement, et par deux plans horizontaux qui s'étendent horizontalement à travers le logement de tube de rinçage ou le moyen de fixation (3), respectivement,
et une prise électrique (4) pour l'alimentation en courant de l'article sanitaire est disposée dans l'espace intermédiaire (10).

2. Cadre de montage (1) selon la revendication 1, **caractérisé en ce que** l'espace intermédiaire (10) est disposé de telle sorte qu'il est librement accessible à l'état monté du cadre de montage (1), et dans lequel l'espace intermédiaire (10) à l'état monté, dans le cas d'un article sanitaire relié au cadre de montage (1), est de préférence recouvrable par l'article sanitaire.

3. Cadre de montage (1) selon l'une des revendications 1 à 2, **caractérisé en ce que** le moyen de fixation (3) est un collier de serrage (3) qui est en liaison avec le cadre de montage.

4. Cadre de montage (1) selon l'une des revendications 1 à 3, **caractérisé en ce que** la prise électrique (4) est fixée au cadre de montage (1).

5. Procédé de montage d'un article sanitaire, en particulier d'un WC ou d'un WC lavant, sur un cadre de montage (1) selon l'une des revendications 1 à 4, **caractérisé par** les étapes :
- fixer la prise électrique (4) au cadre de montage (1),
- fixer l'article sanitaire au cadre de montage (1), et
- raccordement électrique de la prise électrique (4) à l'article sanitaire.
